# FASCICULE DE BREVET EUROPEEN

(11) **EP 2 727 699 B1**
(45) Date de publication et mention de la délivrance du brevet: **19.08.2015**
(21) Numéro de dépôt: 13188285.4
(22) Date de dépôt: 11.10.2013
(51) Int. Cl.: B29C 45/14, B60N 3/04

(54) **Procédé de fabrication d'un tapis de sol pour la protection d'un tapis de première monte d'un vehicule automobile et tapis de sol obtenu**
Herstellungsverfahren einer Bodenmatte zum Schutz einer Erstausrüstungsmatte eines Kraftfahrzeugs, und so erhaltene Bodenmatte
Method for manufacturing a floor mat for protecting an original mat of a motor vehicle and floor mat obtained

(30) Priorité: 31.10.2012 FR 1260445
(43) Date de publication de la demande: 07.05.2014
(73) Titulaire: Gery Trentesaux Investissements, 59223 Roncq (FR)
(72) Inventeur: Trentesaux, GERY, 59000 LILLE (FR); Escriche Perez, Victor, 59700 BOLESLAWIEC (FR)
(74) Mandataire: Balesta, Pierre

(56) Documents cités:
- US-A- 4 491 556
- US-B1- 6 221 298
- US-B1- 6 479 006

## Description

### Arrière-plan de l'invention

La présente invention concerne un procédé de fabrication d'un tapis de sol pour la protection d'un tapis de première monte d'un véhicule automobile et le tapis de sol obtenu par la mise en oeuvre dudit procédé.

Il est courant de protéger le tapis de première monte solidarisé au plancher d'un véhicule automobile, par exemple par collage, afin d'en prolonger la durée de vie. Ces tapis de sol doivent adhérer au tapis de première monte afin d'éviter de glisser de la position dans laquelle ils ont été placés, en particulier s'agissant des tapis de sol disposés sous les pédales du côté conducteur. Ces tapis de sol doivent également permettre de récupérer les particules de terre ou autres cailloux ramenés par les chaussures des passagers et du conducteur.

Les tapis de sol comprennent un panneau souple, tel qu'un panneau textile, revêtu sur sa face envers d'une couche dans au moins un matériau polymère, par exemple un latex de polyuréthane, afin de conférer une certaine rigidité et donc une bonne tenue auxdits tapis.

Le pourtour des tapis de sol est terminé en rapportant soit par couture une ganse textile, plastique ou en similicuir de différentes textures, couleurs et dessins, soit par un fil surjet. La couture peut être effectuée sur une machine à coudre de type overlock à l'aide d'un fil en polypropylène ou en polyamide ou sur une machine à coudre à double ou triple traction avec un accessoire particulier désigné sous le terme de dispositif passepoil, lorsque les finitions du pourtour mettent en oeuvre des ganses.

Ces tapis de sol peuvent présenter également un protège-talon ou talonnette lorsqu'ils sont destinés à être disposés sur les tapis de première monte du côté conducteur, pour éviter que le tapis de première monte ne s'abime par frottement du talon de la chaussure sur sa face externe. Cette talonnette peut être fabriquée en un matériau plastique, notamment en PVC (polychlorure de vinyle), en PP (polypropylène), en PE (polyéthylène) ou en caoutchouc ou encore dans un matériau textile, par exemple une moquette ou un tissu. La talonnette est solidarisée au tapis de sol, selon sa face externe, par couture ou encore par soudure ultra-sons ou haute-fréquences, ce qui implique dans ces deux derniers cas que le matériau de la talonnette soit compatible avec celui de la zone du tapis de sol selon laquelle elle est solidarisée.

Ces finitions apportent un résultat esthétique et fonctionnel sans attribuer de rigidité et donc de tenue au tapis de sol. Au terme de quelques mois d'usure, le panneau souple textile du tapis de sol, en général une moquette, perd sa consistance et commence à se déformer et à se détériorer. Le tapis de sol ainsi déformé peut gêner les passagers et le conducteur. S'agissant du conducteur, cette gêne peut s'avérer dangereuse si elle risque d'entraver la conduite.

On connait ainsi du document ES 2.320.404 un tapis de sol dont le pourtour comprend une bordure moulée. Le panneau souple textile est disposé dans le fond d'un moule et séparé d'un canal par une rainure dans lequel un matériau polymère à l'état fondu est coulé. La rainure a pour fonction d'empêcher le polymère fondu de migrer vers le panneau textile. Néanmoins, ce procédé ne permet pas d'obtenir une bonne liaison entre le panneau souple textile et la bordure moulée sur son pourtour. Une autre solution est décrit dans le document US 4 491 556 A.

### Objet et résumé de l'invention

La présente invention a ainsi pour but de proposer un tapis de sol ayant des finitions simplifiées dans leur fabrication et conférant davantage de rigidité, de tenue et une durée de vie améliorée comparativement aux tapis de sol connus et décrits ci-dessus.

La présente invention a ainsi pour objet, selon un premier aspect, un procédé de fabrication d'un tapis de sol, en particulier pour la protection d'un tapis de première monte d'un véhicule automobile comprenant de manière caractéristique les étapes suivantes :
a) Fournir et découper selon une forme déterminée un panneau souple ayant des faces interne et externe opposées ;
b) Ménager une ouverture dans ledit panneau souple, le pourtour de ladite ouverture étant délimité par une bordure intermédiaire disposée entre des bordures interne et externe ;
c) Fournir un moule comportant un fond duquel se projette au moins un premier élément de cloisonnement ayant un sommet, ledit premier élément de cloisonnement délimitant un volume intérieur déterminé ;
d) Disposer ledit panneau souple dans le moule, ledit panneau souple et ledit élément de cloisonnement étant agencés en sorte que les bordures externe et interne se projettent au moins en partie respectivement à l'intérieur et à l'extérieur dudit volume intérieur, la bordure intermédiaire étant en appui, au moins en partie, sur le sommet du premier élément de cloisonnement ;
e) Fournir un contre-moule agencé en sorte de coopérer avec ledit moule et pincer la bordure intermédiaire contre le sommet dudit premier élément de cloisonnement ;
f) Injecter au moins un polymère à l'état fondu dans ledit volume intérieur via des moyens de distribution agencés dans le moule et le contre-moule en sorte de surmouler, au moins en partie, la bordure externe et combler en tout ou partie ladite ouverture par la formation d'une partie surmoulée débouchant sur les faces interne et externe du panneau souple.

Avantageusement, la fabrication et la solidarisation de la partie surmoulée sur le panneau souple sont effectuées en une seule opération par surmoulage de l'ouverture ménagée dans le panneau souple. Cette partie surmoulée confère ainsi de la rigidité au tapis de sol, et est parfaitement solidarisée à ce dernier en prenant en sandwich la bordure externe de l'ouverture du panneau souple sur ses faces interne et externe. Le tapis de sol selon l'invention comprend une ou plusieurs parties injectées formant une talonnette de protection pour le tapis de sol. Cette finition n'est pas ainsi manuelle contrairement à ce qui se rencontre dans l'état de la technique lors de l'emploi de machines à coudre, de machines ultra-sons ou hautes fréquences. La finition de la talonnette est ainsi davantage reproductible.

Le fond du moule débouchant dans le volume intérieur délimité par ledit élément de cloisonnement peut comprendre avantageusement plusieurs alvéoles creuses afin de former sur la face interne de la partie injectée, débouchant du côté de la face interne du panneau souple, plusieurs protubérances antidérapantes. Il est ainsi possible en une seule opération de surmoulage de former une partie surmoulée et des protubérances antidérapantes sur la face interne du tapis de sol.

De préférence, l'élément de cloisonnement a une hauteur (H) de quelques millimètres, inférieure ou égale à 10 mm, la bordure interne de l'ouverture et le restant du panneau souple se projetant à l'extérieur dudit élément de cloisonnement. Lorsque le panneau souple comprend un panneau textile, éventuellement revêtue sur sa face interne d'une couche dans un matériau polymère, la bordure interne de l'ouverture et le restant du panneau souple à l'extérieur dudit volume intérieur ne sont pas ainsi écrasées par le contre-moule, en particulier s'agissant d'un panneau textile à boucles ou tufté.

Le moule et le contre-moule selon l'invention peuvent être formés dans une seule plaque ou dans plusieurs plaques, lesquelles sont complémentaires et se superposent pour former ledit moule.

Le panneau souple selon l'invention peut être un panneau textile (un tissu, un tricot, un non-tissé, une moquette, une moquette tuftée, un tapis aiguilletée, par exemple un non-tissé de fibres cardées et aiguilletées, ou leur combinaison), ou encore un panneau textile revêtu sur sa face envers d'une couche dans au moins un matériau polymère, par exemple une couche en PVC ou un latex, notamment en polyuréthane.

Le panneau souple peut être plan ou en trois dimensions, dans ce dernier cas il a subit une opération de thermoformage avant le surmoulage de ladite ouverture.

Le tracé ou dessin de l'ouverture ménagée dans le panneau souple correspond au tracé suivi par l'élément de cloisonnement délimitant un volume intérieur déterminé. Néanmoins, la surface (mm²) de l'ouverture est inférieure à la surface (mm²) du tracé délimité par ledit élément cloisonnement, de préférence d'au moins 20%, encore de préférence d'au moins 10%, en sorte qu'une bordure externe soit ménagée par rapport audit élément de cloisonnement et puisse se projeter dans le volume intérieur de cette dernière.

Le panneau souple peut comprendre plusieurs ouvertures chacune correspondant sur le moule à un élément de cloisonnement dont les dessins correspondent aux dessins des ouvertures en ayant toutefois des surfaces (mm²) plus importantes que celles des ouvertures.

De préférence, le pourtour de l'ouverture est délimité par une bordure externe laquelle comprend des bordures externes avant, arrière et latérales.

De préférence, ledit au moins un polymère injecté est choisi seul ou en combinaison parmi les polymères suivants : polychlorure de vinyle (PVC), polyéthylène (PE), polypropylène (PP), NBR-PVC (nitrile butadiène rubber et polychlorure de vinyle), élastomères de polyéthylène (TPE), les syntoprènes.

La bordure externe de l'ouverture peut être surmoulée sur tout son périmètre ou au moins en partie selon l'effet recherché.

L'ouverture ménagée dans le panneau souple ne débouche pas selon l'un des bords du panneau souple.

La partie injectée est à l'aplomb des faces externe et interne du panneau souple. Les dimensions (hauteur, longueur, largeur, forme) de la partie injectée sont déterminées en fonction du volume intérieur délimité par l'élément de cloisonnement du moule complété par le volume intérieur complémentaire supporté en vis-à-vis par le contre-moule.

Il est possible de faire varier la texture et les dessins supportés par la partie injectée selon les dessins disposés dans le volume intérieur délimité par l'élément de cloisonnement et le polymère injecté choisi.

Dans une variante, le pourtour du panneau souple est délimité par une bordure principale intermédiaire disposée entre des bordures principales externe et interne. En outre, le moule comporte un canal ayant une profondeur (e) et une largeur (1) délimitant un volume intérieur avec au moins une paroi dudit moule, ledit canal étant agencé par rapport auxdits moule et contre-moule en sorte qu'une fois le panneau souple disposé dans le moule, la bordure principale externe se projette au moins en partie dans le volume intérieur, le moule et le contre-moule étant agencés en sorte de pincer au moins en partie ladite bordure principale intermédiaire. En outre, au cours de l'étape f), au moins un polymère à l'état fondu est injecté dans ledit volume intérieur via des moyens de distribution agencés dans lesdits moule et contre-moule en sorte de surmouler au moins en partie ladite bordure principale externe du panneau souple pour la formation d'un rebord.

Le pourtour extérieur du panneau souple est ainsi pris en sandwich par un rebord injecté s'étendant entre la face externe et la face interne du panneau souple.

Le fond du moule débouchant dans le volume intérieur délimité par ledit canal et au moins une paroi du moule peut comprendre avantageusement plusieurs alvéoles creuses afin de former sur la face interne du rebord injecté, débouchant sur la face interne du panneau souple, plusieurs protubérances antidérapantes. Il est ainsi possible en une seule opération de surmoulage de former une partie surmoulée faisant office de talonnette et un rebord, des faces internes desquels s'étendent des protubérances anti-migratoires.

Cette technique de surmoulage permet de fabriquer et de solidariser en une seule opération un rebord sur le panneau souple. En outre, le rebord injecté contribue à conférer de la rigidité et améliorer la durée de vie du tapis de sol selon l'invention.

Il est possible de faire varier la hauteur dudit rebord par rapport aux faces interne et externe du panneau souple.

Le rebord selon l'invention est à l'aplomb du panneau souple de sorte qu'il délimite un bac de récupération pour les salissures et particules.

Il est également possible de faire varier les textures et les dessins du rebord selon le polymère injecté et les dessins disposés à l'intérieur du canal.

Le pourtour du panneau souple est délimité par une bordure externe principale laquelle comprend des bordures externes avant, arrière et latérales.

Le volume intérieur est délimité entre ledit canal et au moins une paroi du moule. Ce volume intérieur est bien sûr complété par un volume intérieur complémentaire et similaire formé sur le contre-moule coopérant avec ledit moule.

Le moule peut comporter plusieurs canaux en sorte de surmouler sur toute son périmètre la bordure extérieure principale. La bordure extérieure principale peut être également surmoulée sur une partie seulement de son périmètre, par exemple uniquement sur les bordures extérieures arrière et latérales du panneau souple.

Dans une variante, la partie surmoulée présente des faces interne et externe opposées et le fond du moule et/ou du contre-moule débouchant dans le volume intérieur délimité par le premier élément de cloisonnement comprend une ou plusieurs rainures pour la formation d'une ou plusieurs lignes correspondantes sur la face interne et/ou la face externe de ladite partie.

Ces lignes formeront des dessins sur la ou les faces externe et interne de la partie injectée.

Dans une variante, le premier élément de cloisonnement a un sommet de hauteur (H) et de largeur (1) supérieur ou égal à 5 mm, de préférence supérieur ou égal à 10 mm.

Dans une variante, le premier élément de cloisonnement a une forme générale en coupe transversale tronconique.

Cette forme permet d'améliorer la résistance de l'élément de cloisonnement vis-à-vis de la pression générée par l'injection dudit au moins un polymère. En outre, cette forme stabilise le panneau souple dans le moule et le contre-moule lors de l'injection, et donc permet d'obtenir une partie injectée parfaitement surmoulée uniquement sur la bordure externe.

Dans une variante, le sommet dudit élément de cloisonnement correspond à la petite base de la forme tronconique.

Dans une variante, le moule comprend plusieurs premiers éléments de cloisonnement et/ou plusieurs canaux.

Dans une variante, le panneau souple est un panneau textile ou un panneau textile recouvert en tout ou partie sur sa face envers d'une feuille dans un matériau polymère ou d'une pièce textile, tel qu'un feutre.

La présente invention a pour objet, selon un deuxième aspect, un tapis de sol obtenu par la mise en oeuvre du procédé selon l'une quelconque des variantes de réalisation précédentes, pour la protection d'un tapis de première monte d'un véhicule automobile, comprenant de manière caractéristique un panneau souple ayant une ouverture dont le pourtour est délimité par une bordure externe, et une partie dans au moins un matériau polymère ayant au moins un évidement latéral en forme de U recevant au moins en partie ladite bordure externe.

Dans une variante, le pourtour du panneau souple est délimité par une bordure principale externe, et le tapis de sol selon l'invention comprend un rebord dans au moins un matériau polymère comprenant un évidement latéral en forme de U recevant au moins en partie ladite bordure principale externe.

La forme des éléments de cloisonnement et des canaux pour pincer la bordure intermédiaire d'une ouverture et la bordure intermédiaire principale du panneau souple est importante. Il est en effet complexe d'injecter un polymère sur des portions périphériques - correspondant ici aux bordures externes- d'un panneau souple qui ne sont que de quelques millimètres, peu épais et léger, sans que ce dernier ne migre de sa position initiale dans le moule et le contre-moule sous l'effet de la pression généré par le polymère lors de son injection.

### Brève description des dessins

La présente invention sera mieux comprise à la lecture d'un exemple de réalisation, cité à titre non limitatif, et illustré par les figures ci-après, annexées à la présente, et dans lesquelles :
- La figure **1** représente de façon schématique et vue de dessus un panneau souple selon l'invention avant surmoulage ;
- La figure **2** représente de façon schématique et vue de dessus un tapis de sol selon l'invention comprenant le panneau souple représenté à la figure **1** ;
- La figure 3A est une représentation schématique du tapis de sol selon l'invention selon le plan de coupe III-III représenté à la figure **2** ;

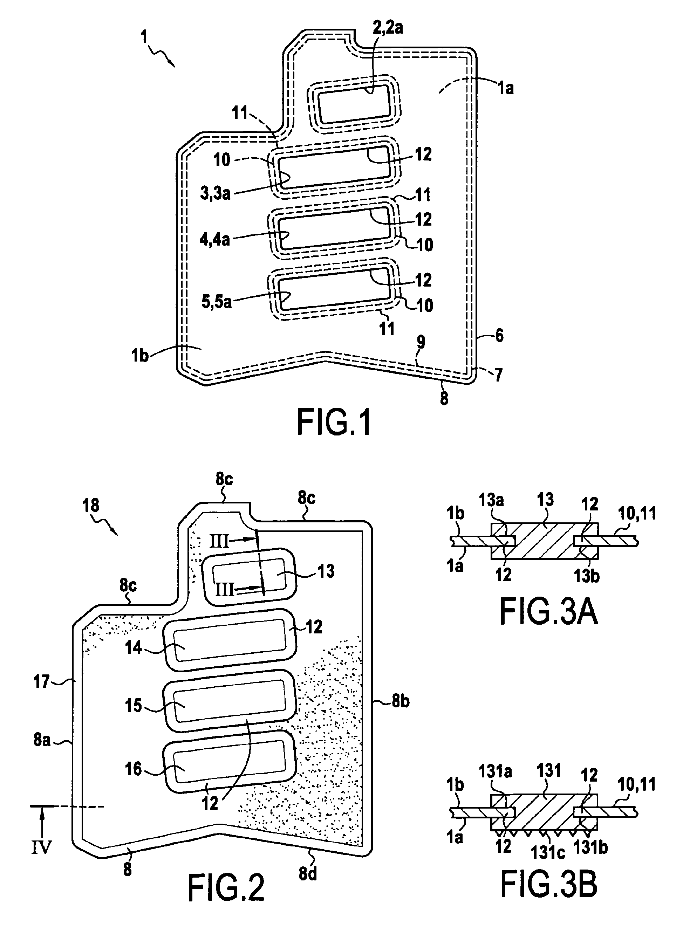

- La figure **3**B est une représentation schématique d'une variante du tapis de sol selon l'invention représenté à la figure **3**A ;

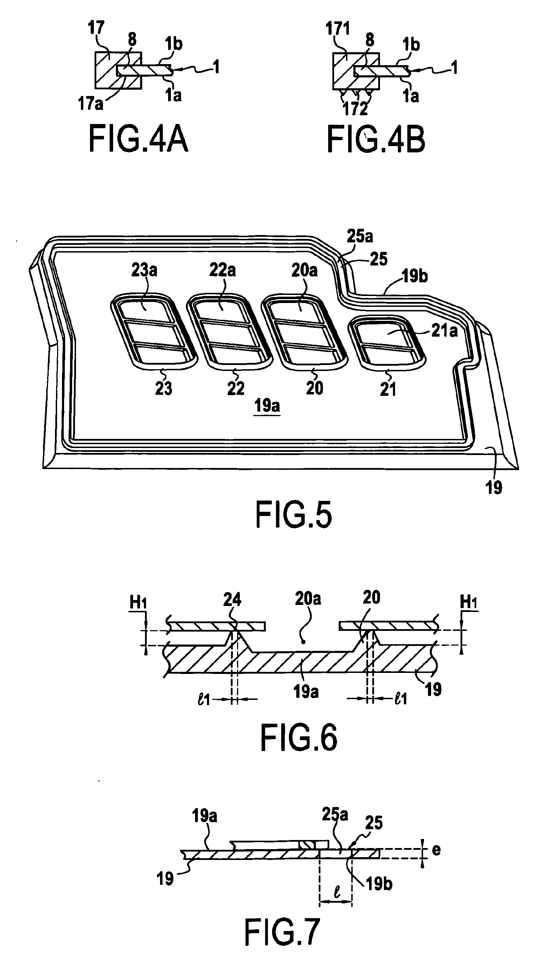

- La figure **4**A est une représentation schématique du tapis de sol selon l'invention selon le plan de coupe IV-IV réalisé à la figure **2** ;
- La figure **4**B est une représentation schématique d'une variante du tapis de sol selon l'invention représenté à la figure **4**A ;
- La figure **5** représente en perspective, vue de dessus, un moule mis en oeuvre dans le cadre du procédé selon l'invention ;
- La figure **6** représente de façon schématique et en coupe transversale une partie du moule représenté à la figure **5** dans lequel est disposé un panneau souple selon l'invention pour le surmoulage de la bordure externe d'une des ouvertures le traversant ; et
- La figure **7** représente de façon schématique et en coupe transversale une partie du moule représenté à la figure **5** pour le surmoulage de la bordure externe principale du panneau souple selon l'invention.

### Description détaillée de l'invention

La figure **1** représente un panneau souple **1** mis en oeuvre dans le procédé selon l'invention et ayant des faces interne **1a** et externe **1b** opposés. Ce panneau souple **1** présente une forme déterminée et quatre ouvertures **2,3,4,5.** Le pourtour **6** du panneau souple **1** comprend une bordure intermédiaire principale **7** disposée entre des bordures externe **8** et interne **9** principales. Chaque ouverture **2**,**3**,**4**,**5** comprend sur son pourtour **2a,3a,4a,5a** une bordure intermédiaire **10** disposée entre des bordures interne **11** et externe **12.**

Une fois le panneau souple **1** surmoulé, les bordures externes **11** des ouvertures **2**,**3**,**4**,**5** sont surmoulés par des parties injectées **13**,**14**,**15**,**16**, dans cet exemple précis ces dernières sont pleines. La bordure externe principale **8** du panneau souple **1** est également surmoulée d'un rebord **17** disposés sur les bordures externes principales latérales **8**a,**8**b, avant **8**c et arrière **8**d du tapis de sol **18**. Les parties injectées **13**,**14**,**15**,**16** comprennent chacune deux évidements latéraux en forme de U, disposées en vis-à-vis, et référencés **13**a et **13**b à la figure **3**A concernant la partie injectée **13** recevant la bordure externe **12** des dites ouvertures **2,3,4,5.** Les parties injectées **13,14,15,16** prennent ainsi en sandwich la bordure externe **12** des ouvertures **2,3,4,5** selon les faces interne **1**a et externe **1**b du panneau souple **1**.

La variante de la partie injectée **13** représentée à la figure **3**B représente une partie injectée **131** comprenant également deux évidements latéraux **131a** et **131b** en forme de U recevant la bordure externe **12** de l'ouverture **2**. Cette partie surmoulée **131** comprend également sur sa face interne débouchant selon la face interne **1a** du panneau souple **1**, des protubérances **131**c antidérapantes formées par surmoulage lors de l'étape de surmoulage de la partie surmoulée **131.**

Le rebord **17**, représenté également à la figure **4**A, comporte un seul évidement latéral **17a** en forme de U recevant la bordure externe principale **8** du panneau souple **1** et ce sur les faces interne **1a** et externe **1b** du panneau souple **1.**

Une variante du rebord injecté **17** est représentée à la figure **4**B, laquelle comprend des protubérances antidérapantes **172** se projetant de la face interne du rebord **171** débouchant selon la face interne **1a** du panneau souple **1.**

Le moule **19** utilisé dans le procédé selon l'invention et représenté à la figure **5** comprend plusieurs éléments de cloisonnement **20,21,22,23** s'étendant du fond **19a** dudit moule **19** et ayant des sommets **24** de hauteur et de largeur déterminées délimitant chacun un volume intérieur **20a,21a,22a,23a** déterminé. Sur la figure **6**, le sommet **24** de l'élément de cloisonnement **20** a une hauteur **H1** et une largeur **I1**. Le moule **19** comprend également un canal continu **25** de profondeur (e) et de largeur (I) déterminées, délimitant avec au moins une paroi interne **19b** du moule **19**, un volume intérieur **25**a déterminé. Dans cet exemple précis, le canal **25** est agencé en sorte de surmouler toute la bordure externe principale, i.e les bordures externes principales latérales **8**a,**8**b, avant **8**c et arrière **8**d du panneau souple **1** et délimite un volume intérieur **25**a avec plusieurs parois internes **19b** du moule **19.**

En outre, dans cet exemple précis, les éléments de cloisonnement **20,21,22,23** ont sur leurs longueurs, des sommets **24** de même hauteur H et de même largeur (I).

Lors de la fabrication du tapis de sol **17** selon l'invention, le panneau souple **1** est disposé dans le fond **19**a du moule **19** représenté à la figure **6** en sorte que la bordure intermédiaire **10** des ouvertures **2,3,4,5,** sur la figure **6** celle de l'ouverture **2,** vienne en appui sur le sommets **24** de l'élément de cloisonnement **20,** les bordures externe **12** et interne **11** de l'ouverture **2** se projetant respectivement à l'intérieur et à l'extérieur dudit volume intérieur **20**a.

En parallèle, la bordure intermédiaire principale **7** du panneau souple **1** vient également en appui sur le fond **19a** du moule **19** à l'aplomb du canal **25**, et la bordure externe principale **8** se projette dans le volume intérieur **25**a délimité par le canal **25** et la paroi **19b** du moule **19.**

Un polymère à l'état fondu est ensuite injecté dans les dits volumes intérieurs **20a,21a,22a,23a,25a** via des moyens de distribution agencés dans le moule **19** et le contre-moule (non représenté) en sorte de recouvrir les bordures externes **12** des ouvertures **2,3,4,5** et la bordure externe principale **8** sans atteindre les bordures intermédiaires **7,10.** Une fois le polymère refroidi, le tapis de sol **17** est démoulé.

Avantageusement, en une seule opération de surmoulage, le rebord **17,** la talonnette **13,14,15,16** du tapis de sol **17,** et éventuellement des protubérances antidérapantes **131c** et **172,** sont fabriqués et solidarisés au panneau souple **1.**

En outre, ces parties injectées **13,14,15,16** et le rebord **17** améliorent la rigidité et la durée de vie des finitions du tapis de sol **17** obtenu.

## Revendications

1. Procédé de fabrication d'un tapis de sol, en particulier pour la protection d'un tapis de première monte d'un véhicule automobile **caractérisé en ce qu'**il comprend les étapes suivantes :
a) Fournir et découper selon une forme déterminée un panneau souple (1) ayant des faces interne (1a) et externe (1b) opposées ;
b) Ménager une ouverture (2,3,4,5) dans ledit panneau souple 1, le pourtour (2a,3a,4a,5a) de ladite ouverture (2,3,4,5) étant délimité par une bordure intermédiaire (10) disposée entre des bordures interne (11) et externe (12) ;
c) Fournir un moule (19) comportant un fond (19a) duquel se projette au moins un premier élément de cloisonnement (20,21,22,23) ayant un sommet (24), ledit premier élément de cloisonnement (20,21,22,23) délimitant un volume intérieur déterminé (20a,21a,22a,23a) ;
d) Disposer ledit panneau souple (1) dans le moule (19), ledit panneau souple (1) et ledit élément de cloisonnement (20,21,22,23) étant agencés en sorte qu'au moins en partie les bordures externe (12) et interne (11) se projettent respectivement à l'intérieur et à l'extérieur dudit volume intérieur (20a,21a,22a,23a), la bordure intermédiaire (10) étant au moins en partie en appui sur le sommet (24) du premier élément de cloisonnement (20,21,22,23) ;
e) Fournir un contre-moule agencé en sorte de coopérer avec ledit moule (19) et pincer la bordure intermédiaire (10) contre le sommet (24) dudit premier élément de cloisonnement (20,21,22,23) ;
f) Injecter au moins un polymère à l'état fondu dans ledit volume intérieur (20a,21a,22a,23a) via des moyens de distribution agencés dans le moule (19) et le contre-moule en sorte de surmouler au moins en partie ladite bordure externe (12) et combler en tout ou partie ladite ouverture (2,3,4,5) par la formation d'une partie surmoulée (13,14,15,16) débouchant sur les faces interne (1a) et externe (1b) du panneau souple (1).

2. Procédé de fabrication selon la revendication 1, **caractérisé en ce que** le pourtour (6) du panneau souple (1) est délimité par une bordure principale intermédiaire (7) disposée entre des bordures principales externe (8) et interne (9), **en ce que** le moule (19) comporte un canal (25) ayant une profondeur (e) et une largeur (I) délimitant un volume intérieur (25a) avec au moins une paroi (19b) dudit moule (19), ledit canal (25) étant agencé par rapport auxdits moule (19) et contre-moule en sorte qu'une fois le panneau souple (1) disposé dans le moule, la bordure principale externe (8) se projette au moins en partie dans le volume intérieur (25a), le moule (19) et le contre-moule étant agencé en sorte de pincer au moins en partie la bordure principale intermédiaire (7), et **en ce qu'**au cours de l'étape f), au moins un polymère à l'état fondu est injecté dans ledit volume intérieur (25a) via des moyens de distribution agencés dans lesdits moule (19) et contre-moule en sorte de surmouler au moins en partie ladite bordure principale externe (8) du panneau souple (1) pour la formation d'un rebord (17).

3. Procédé selon l'une ou l'autre des revendications 1 et 2, **caractérisé en ce que** la partie surmoulée présente des faces interne et externe opposées et **en ce que** le fond du moule et/ou du contre-moule débouchant dans ledit volume intérieur comprend une ou plusieurs rainures pour la formation d'une ou plusieurs lignes correspondantes sur la face interne et/ou la face externe de ladite partie.

4. Procédé selon l'une quelconque des revendications 1 à 3, **caractérisé en ce que** le premier élément de cloisonnement (20,21,22,23) a un sommet de hauteur (H) et de largeur (I) supérieur ou égal à 5 mm, de préférence supérieur ou égal à 10 mm.

5. Procédé de fabrication selon l'une quelconque des revendications 1 à 4, **caractérisé en ce que** le premier élément de cloisonnement (20,21,22,23) a une forme générale en coupe transversale tronconique.

6. Procédé de fabrication selon la revendication 5, **caractérisé en ce que** le sommet (24) dudit élément de cloisonnement (20,21,22,23) correspond à la petite base de la forme tronconique.

7. Procédé de fabrication selon l'une quelconque des revendications 1 à 6, **caractérisé en ce que** le moule (19) comprend plusieurs premiers éléments de cloisonnement (20,21,22,23) et/ou plusieurs canaux (25).

8. Procédé de fabrication selon l'une quelconque des revendications 1 à 7, **caractérisé en ce que** le panneau souple (1) est un panneau textile ou un panneau textile recouvert en tout ou partie sur sa face envers d'une feuille dans un matériau polymère ou d'une pièce textile, telle qu'un feutre.

9. Tapis de sol (18) obtenu par la mise en oeuvre du procédé selon l'une quelconque des revendications 1 à 8 pour la protection d'un tapis de première monte d'un véhicule automobile, **caractérisé en ce qu'**il comprend un panneau souple (1) ayant au moins une ouverture (2,3,4,5) dont le pourtour est délimité par une bordure externe (12), et une partie (13,14,15,16,131) dans au moins un matériau polymère ayant au moins un évidement latéral (13a,13b,131a,131b,17a) en forme de U recevant au moins en partie ladite bordure externe (12).

10. Tapis de sol (18) selon la revendication 9, **caractérisé en ce que** le pourtour (6) du panneau souple (1) est délimité par une bordure principale externe (8) et **en ce qu'**il comprend un rebord (17,171) dans au moins un matériau polymère comprenant un évidement latéral en forme de U recevant au moins en partie ladite bordure principale externe (8).

## Patentansprüche

1. Verfahren zur Herstellung einer Bodenmatte, insbesondere zum Schutz einer Erstausrüstungsmatte eines Kraftfahrzeugs, **dadurch gekennzeichnet, dass** es die folgenden Schritte umfasst:
a) Bereitstellen und Schneiden einer biegsamen Platte (1) mit einer Innenseite (1a) und einer entgegengesetzt liegenden Außenseite (1 b) in eine bestimmte Form,
b) Ausnehmen einer Öffnung (2, 3, 4, 5) in der biegsamen Platte 1, wobei der Umfang (2a, 3a, 4a, 5a) der Öffnung (2, 3, 4, 5) durch einen Zwischenrand (10), der zwischen dem inneren (11) und dem äußeren Rand (12) angeordnet ist, begrenzt ist,
c) Bereitstellen einer Form (19), umfassend einen Boden (19a), aus dem zumindest ein erstes Abtrennungselement (20, 21, 22, 23) mit einer Spitze (24) herausragt, wobei das erste Abtrennungselement (20, 21, 22, 23) ein bestimmtes Innenvolumen (20a, 21a, 22a, 23a) begrenzt,
d) Anordnen der biegsamen Platte (1) in der Form (19), wobei die biegsame Platte (1) und das Abtrennungselement (20, 21, 22, 23) derart vorgesehen sind, dass zumindest teilweise der Außenrand (12) und der Innenrand (11) innerhalb bzw. außerhalb des Innenvolumens (20a, 21,a, 22a, 23a) herausragen, wobei der Zwischenrand (10) zumindest teilweise auf der Spitze (24) des ersten Abtrennungselements (20, 21, 22, 23) aufliegt,
e) Bereitstellen einer Gegenform, die derart angeordnet ist, dass sie mit der Form (19) zusammenwirkt und den Zwischenrand (10) gegen die Spitze (24) des ersten Abtrennungselements (20, 21, 22, 23) klemmt,
f) Einspritzen zumindest eines Polymers im geschmolzenen Zustand in das Innenvolumen (20a, 21a, 22a, 23a) über Verteilungsmittel, die in der Form (19) und der Gegenform angeordnet sind, um den Außenrand (12) zumindest teilweise zu überformen und die Gesamtheit oder einen Teil der Öffnung (2, 3, 4, 5) durch die Bildung eines überformten Teils (13, 14, 15, 16), der auf der Innenseite (1 a) und der Außenseite (1 b) der biegsamen Platte (1) mündet, zu füllen.

2. Herstellungsverfahren nach Anspruch 1, **dadurch gekennzeichnet, dass** der Umfang (6) der biegsamen Platte (1) durch einen Hauptzwischenrand (7) begrenzt ist, der zwischen dem Hauptaußenrand (8) und dem Hauptinnenrand (9) angeordnet ist, dass die Form (19) einen Kanal (25) umfasst, der eine Tiefe (e) und eine Breite (I) hat und ein Innenvolumen (25a) mit zumindest einer Wand (19b) der Form (19) begrenzt, wobei der Kanal (25) derart in Bezug zu der Form (19) und der Gegenform angeordnet ist, dass, wenn die biegsame Platte (1) in der Form angeordnet ist, der Hauptaußenrand (8) zumindest teilweise in das Innenvolumen (25a) hineinragt, wobei die Form (19) und die Gegenform derart angeordnet sind, dass der Hauptzwischenrand (7) zumindest teilweise eingeklemmt wird, und dass während des Schrittes f) zumindest ein Polymer im geschmolzenen Zustand in das Innenvolumen (25a) über Verteilungsmittel eingespritzt wird, die in der Form (19) und der Gegenform angeordnet sind, um zumindest teilweise den Hauptaußenrand (8) der biegsamen Platte (1) zu überformen, um eine Umrandung (17) zu bilden.

3. Verfahren nach dem einen oder dem anderen der Ansprüche 1 und 2, **dadurch gekennzeichnet, dass** der überformte Teil entgegengesetzt liegende Innen- und Außenseiten aufweist, und dass der Boden der Form und/oder der Gegenform, der in das Innenvolumen mündet, eine oder mehrere Nuten zur Bildung einer oder mehrerer entsprechender Linien auf der Innenseite und/oder der Außenseite des Teils umfasst.

4. Verfahren nach einem der Ansprüche 1 bis 3, **dadurch gekennzeichnet, dass** das erste Abtrennungselement (20, 21, 22, 23) eine Spitze mit einer Höhe (H) und einer Breite (I) größer oder gleich 5 mm, vorzugsweise größer oder gleich 10 mm, aufweist.

5. Herstellungsverfahren nach einem der Ansprüche 1 bis 4, **dadurch gekennzeichnet, dass** das erste Abtrennungselement (20, 21, 22, 23) im Querschnitt eine allgemeine kegelstumpfartige Form hat.

6. Herstellungsverfahren nach Anspruch 5, **dadurch gekennzeichnet, dass** die Spitze (24) des Abtrennungselements (20, 21, 22, 23) der kurzen Basis der Kegelstumpfform entspricht.

7. Herstellungsverfahren nach einem der Ansprüche 1 bis 6, **dadurch gekennzeichnet, dass** die Form (19) mehrere erste Abtrennungselemente (20, 21, 22, 23) und/oder mehrere Kanäle (25) umfasst.

8. Herstellungsverfahren nach einem der Ansprüche 1 bis 7, **dadurch gekennzeichnet, dass** die biegsame platte (1) eine Textilplatte oder eine auf ihrer Rückseite zur Gänze oder teilweise mit einer Polymerfolie oder einem Textilteil, wie Filz, überzogene Textilplatte ist.

9. Bodenmatte (18), die durch den Einsatz des Verfahrens nach einem der Ansprüche 1 bis 8 hergestellt wird, für den Schutz einer Erstausrüstungsmatte eines Kraftfahrzeugs, **dadurch gekennzeichnet, dass** sie eine biegsame Platte (1) mit mindestens einer Öffnung (2, 3, 4, 5), deren Umfang durch einen Außenrand (12) begrenzt ist, und einem Teil (13, 14, 15, 16, 131) aus mindestens einem Polymermaterial mit mindestens einer seitlichen Ausnehmung (13a, 13b, 131 a, 131 b, 17a) in Form eines U umfasst, die zumindest teilweise den Außenrand (12) aufnimmt.

10. Bodenmatte (18) nach Anspruch 9, **dadurch gekennzeichnet, dass** der Umfang (6) der biegsamen Platte (1) durch einen Hauptaußenrand (8) begrenzt ist, und dass er eine Umrandung (17, 171) aus mindestens einem Polymermaterial, umfassend eine U-förmige seitliche Ausnehmung, die zumindest teilweise den Hauptaußenrand (8) aufnimmt, umfasst.

## Claims

1. A fabrication method for fabricating a floor mat, in particular for protecting an original equipment mat of a motor vehicle, the method being **characterized in that** it comprises the following steps:
a) providing a flexible panel (1) having opposite inside and outside faces (1a, 1b) and cutting it to a determined shape;
b) providing an opening (2, 3, 4, 5) in said flexible panel (1), the outline (2a, 3a, 4a, 5a) of said opening (2, 3, 4, 5) being defined by an intermediate edge (10) arranged between inner and outer edges (11, 12);
c) providing a mold (19) having a bottom (19a) from which there projects at least a first partitioning element (20, 21, 22, 23) having a top (24), said first partitioning element (20, 21, 22, 23) defining a determined inside volume (20a, 21a, 22a, 23a);
d) placing said flexible panel (1) in the mold (19), said flexible panel (1) and said partitioning element (20, 21, 22, 23) being arranged in such a manner that the outer and inner edges (12, 11) project at least in part respectively inside and outside said inside volume (20a, 21a, 22a, 23a), the intermediate edge (10) bearing at least in part against the top (24) of the first partitioning element (20, 21, 22, 23);
e) providing a backing mold arranged in such a manner as to co-operate with said mold (19) and pinch the intermediate edge (10) against the top (24) of said first partitioning element (20, 21, 22, 23); and
f) injecting at least one polymer in the molten state into said inside volume (20a, 21a, 22a, 23a) via distribution means arranged inside the mold (19) and the backing mold so as to overmold said outer edge (12) at least in part and fill in said opening (2, 3, 4, 5) in full or in part by forming an overmolded portion (13, 14, 15, 16) emerging in the inner and outer faces (1a, 1b) of the flexible panel (1).

2. A fabrication method according to claim 1, **characterized in that** the outline (6) of the flexible panel (1) is defined by a main intermediate edge (7) arranged between main outer and inner edges (8, 9), **in that** the mold (19) includes a channel (25) of depth (e) and of width (ℓ) co-operating with at least one wall (19b) of said mold (19) to define an inside volume (25a), said channel (25) being arranged relative to said mold (19) and to said backing mold in such a manner that once the flexible panel (1) is arranged in the mold, the main outer edge (8) projects at least in part into the inside volume (25a), the mold (19) and the backing mold being arranged in such a manner as to pinch at least a portion of the main intermediate edge (7), and **in that** during step f), at least one polymer in the molten state is injected into said inside volume (25a) via distribution means arranged in said mold (19) and in said backing mold in such a manner as to overmold said main outer edge (8) of the flexible panel (1) at least in part in order to form a rim (17).

3. A method according to claim 1 or claim 2, **characterized in that** the overmolded portion presents opposite inner and outer faces, and **in that** the bottom(s) of the mold and/or of the backing mold emerging in said inside volume include(s) one or more grooves for forming one or more corresponding lines on the inside face and/or the outside face of said portion.

4. A method according to any one of claims 1 to 3, **characterized in that** the first partitioning element (20, 21, 22, 23) has a top of height (H) and of width (ℓ) greater than or equal to 5 mm, preferably greater than or equal to 10 mm.

5. A fabrication method according to any one of claims 1 to 4, **characterized in that** the first partitioning element (20, 21, 22, 23) is generally frustoconical in cross-sectional shape.

6. A fabrication method according to claim 5, **characterized in that** the top (24) of said partitioning element (20, 21, 22, 23) corresponds to the small base of the frustoconical shape.

7. A fabrication method according to any one of claims 1 to 6, **characterized in that** the mold (19) has a plurality of first partitioning elements (20, 21, 22, 23) and/or a plurality of channels (25).

8. A fabrication method according to any one of claims 1 to 7, **characterized in that** the flexible panel (1) is a textile panel or a textile panel covered in full or in part on its reverse face in a sheet of polymer material or in a patch of textile material, such as a felt.

9. A floor mat (18) obtained by performing the method according to any one of claims 1 to 8 for protecting an original equipment mat of a motor vehicle, the floor mat being **characterized in that** it comprises a flexible panel (1) having at least one opening (2, 3, 4, 5) of outline that is defined by an outer edge (12), and a portion (13, 14, 15, 16, 131) in which a polymer material having at least one lateral recess (13a, 13b, 131a, 131b, 17a) of U-shape receiving said outer edge (12) at least in part.

10. A floor mat (18) according to claim 9, **characterized in that** the outline (6) of the flexible panel (1) is defined by a main outer edge (8) and **in that** it includes a rim (17, 171) made of at least one polymer material having a U-shaped lateral recess receiving said main outer edge (8) at least in part.
